# EUROPÄISCHE PATENTANMELDUNG

(11) **EP 1 566 531 A1**
(43) Veröffentlichungstag der Anmeldung: **24.08.2005**
(21) Anmeldenummer: 04003669.1
(22) Anmeldetag: 19.02.2004
(51) Int. Cl.: F02C 7/16, F01D 5/08

(54) **Gasturbine mit einem gegen Auskühlen geschützten Verdichtergehäuse und Verfahren zum Betrieb einer Gasturbine**

(71) Anmelder: SIEMENS AKTIENGESELLSCHAFT, 80333 München (DE)
(72) Erfinder: Bauer, Holger, 74239 Hardthausen (DE); Küsters, Bernhard, 47475 Kamp-Lintfort (DE); Minninger, Dieter, 46535 Dinslaken (DE); Mittelbach, Marc Dr., 42579 Heiligenhaus (DE)

(57) **Zusammenfassung**

Es wird Gasturbine mit einer Turbine und einem ein Verdichtergehäuse (14) umfassenden Verdichter (10) und ein Verfahren zu deren Betrieb, wobei der Verdichter (10) zur Kühlung der Turbine mittels mindestens einer Anzapfleitung (16) zur Entnahme von komprimierter oder teilweise komprimierter Luft angezapft ist, angegeben, wobei die Anzapfleitung (16) eine Absperreinrichtung, insbesondere ein Ventil (19), aufweist, so dass der Abfluss von Anzapfluft und damit ein Auskühlen des Gehäuses (14) regulierbar ist.

## Beschreibung

Die Erfindung betrifft eine Gasturbine mit gegen Auskühlen, insbesondere gegen zu schnelles Ab- oder Auskühlen geschützten Verdichtergehäuse. Entsprechend betrifft die Erfindung nicht nur die Gasturbine in ihrer Gesamtheit sondern auch den Verdichter mit dem gegen Auskühlen geschützten Verdichtergehäuse und das Verdichtergehäuse selbst. Weiter betrifft die Erfindung ein Verfahren zum Betrieb einer solchen Gasturbine.

Gasturbinen sind allgemein bekannt. Für Gasturbinen sind auch diverse Kühlvorrichtungen bekannt. Solche Kühlvorrichtungen beziehen sich jedoch im Wesentlichen auf eine Kühlung im Bereich einer Brennkammer oder eines Turbinenabschnittes der Gasturbine, vgl. z. B. EP 0 988 441, die sich mit eine Kühlung der Brennkammerwand befasst, oder die EP 0 791 127 B1, EP 1 245 806 A1, WO 01/55559 A1, US 6,120,249, die sich sämtlich mit der Kühlung von Turbinenschaufeln befassen.

Die Erfindung besteht darin, eine Möglichkeit anzugeben, mit der das Auskühlen des Verdichtergehäuses verhindert oder zumindest verzögert wird um die Gefahr von Berührungen zwischen langsamer und schneller auskühlenden Elementen, also z. B. den Gehäuse und dem Rotor, zu verringern.

Bisher ist im Hinblick auf das Problem der Berührungsgefahr nur vorgeschlagen worden, die Abstände zwischen solchen Elementen, insbesondere den so genannten Radialspalte zwischen Rotor und Gehäuseinnenwand, ausreichend groß auszulegen.

Diese Aufgabe wird erfindungsgemäß mit den Merkmalen des Anspruchs 1 gelöst. Dazu ist bei einer Gasturbine mit einer Turbine und einem ein Verdichtergehäuse umfassenden Verdichter, wobei der Verdichter zur Kühlung der Turbine mittels mindestens einer Anzapfleitung zur Entnahme von komprimierter oder teilweise komprimierter Luft angezapft ist, vorgesehen, dass die Anzapfleitung eine Absperreinrichtung, insbesondere ein Ventil, aufweist. Die gleiche Aufgabe wird ebenfalls mit einem Verdichter oder einem Verdichtergehäuse mit den Merkmalen des Anspruchs 8 gelöst.

Des Weiteren wird die Aufgabe durch ein Verfahren zum Betrieb einer solchen Gasturbine mit den Merkmalen des Anspruchs 6 gelöst, indem beim Herunterfahren der Gasturbine die Absperreinrichtung, insbesondere das Ventil, geschlossen oder teilweise geschlossen wird.

Die Erfindung geht von der Erkenntnis aus, dass bei einer Gasturbine bestimmte Elemente schneller abkühlen, als andere Elemente. Bei den schneller abkühlenden Elementen handelt es sich insbesondere um mit dem Volumen der Umgebungsluft in direktem Kontakt stehende Elemente, also z. B. um das Gehäuse der Gasturbine oder um Teile dieses Gehäuses, insbesondere das Verdichtergehäuse. Andere Teile, wie z. B. der Rotor, also die Turbinenwelle mit den daran angebrachten Schaufeln, im Innern der Turbine, kühlen wesentlich langsamer ab. Diese Konstellation macht es notwendig, ausreichende, in ihrer Dimension durch das Maß der Wärmedehnung der beteiligten Elemente bestimmte Abstände z. B. zwischen dem Rotor und dem umgebenden Gehäuse vorzusehen. Der geringste Abstand zwischen Rotor und Gehäuse besteht im Bereich der Enden der Schaufeln des Rotors. Der Abstand zwischen den Enden dieser Schaufeln und dem Gehäuse wird als Radialspalt bezeichnet. Beim Warmstart, also beim Start der Gasturbine mit nur teilweise abgekühltem Rotor aber schon weitgehend abgekühltem Gehäuse ergibt sich die Gefahr des Festklemmens des Rotors im Gehäuse, wenn der Radialspalt nicht ausreichend groß dimensioniert ist. Die Betrachtung des Warmstarts ist demzufolge auch das begrenzende Kriterium bei der Auslegung der Geometrien der Radialspalte zwischen Rotor und Gehäuse, denn ein Anstreifen der Schaufeln an der Gehäuseinnenwand muss unter allen Umständen vermieden werden.

Der Vorteil der Erfindung besteht darin, dass durch die Absperreinrichtung der Wärmeverlust des Verdichtergehäuses regulierbar ist. Beim Herunterfahren der Gasturbine wird die Absperreinrichtung geschlossen oder teilweise geschlossen um einen definierten Wärmeverlust des Verdichtergehäuses zu erreichen. Auf diese Weise kann sichergestellt werden, dass sich das Verdichtergehäuse und der darin rotierende Rotor in etwa in gleichem Maße abkühlen. Die gleichmäßige Abkühlung ist zumindest soweit gewährleistet, dass die Gefahr des Anstreifens des Rotors an der Innenseite des Verdichtergehäuses minimiert ist.

Die abhängigen Ansprüche sind auf bevorzugte Ausführungsformen der vorliegenden Erfindung gerichtet.

Bevorzugt weist die Anzapfleitung eine Kavität auf, die in Strömungsrichtung der entnommenen oder entnehmbaren Luft vor der Absperreinrichtung liegt. Das Volumen der Kavität wirkt damit wie ein Wärmeisolator. Luft ist bekanntlich ein guter Wärmeisolator. In der Kavität ist Luft mit einer Temperatur enthalten, die im Wesentlichen der Temperatur des Rotors entspricht. Die Kavität verhindert oder verzögert also durch den isolierenden Effekt ein Ab- oder Auskühlen des Verdichtergehäuses.

Wenn die Kavität im Gehäuse des Verdichters derart geformt ist, dass sie sich ausgehend von einer Position eines Einlasses der Anzapfleitung und einer in diesem Bereich befindlichen stationären Schaufel zumindest noch bis in den Bereich einer nächst folgenden stationären Schaufel erstreckt, ergibt sich eine vergrößerter wirksame Fläche der als Isolator fungierenden Kavität.

Wenn sich die Kavität bis in den Bereich einer in Richtung des Einströmens der Umgebungsluft in den Verdichter nächst folgenden stationären Schaufel erstreckt, entspricht die Längserstreckung der Kavität der Strömungsrichtung der Umgebungsluft und damit der Hauptrichtung eines Temperaturgradienten im Verdichtergehäuse.

Eine weitere Besonderheit der Erfindung besteht darin, dass der Kavität ein Absperrorgan zugeordnet ist, so dass das Volumen der Kavität vom Volumenstrom durch das Verdichtergehäuse getrennt werden kann.

Der Vorteil der Erfindung und ihrer Ausgestaltungen besteht auch darin, dass die oder jede Kavität auch dafür genutzt werden kann um das Gehäuse der hinteren Verdichterstufen zu kühlen. Hierdurch wird die thermisch bedingte Gesamtausdehnung des Strömungskanals im Verdichter verringert. Die Anzapfluft kann entsprechend weiter "hinten" aus dem Gehäuse abgeführt werden.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen:
- FIG 1: einen Ausschnitt aus einem Halbschnitt durch eine Gasturbine im Bereich des Verdichters,
- FIG 2: den Ausschnitt gemäß FIG 1 mit einer durch eine Absperreinrichtung verriegelbaren Anzapfleitung,
- FIG 3: eine Anzapfleitung mit einer im Hinblick auf eine gewünschte thermische Beeinflussung des Verdichtergehäuses gestalteten und vergrößerten Kavität, und
- FIG 4: die durch eine Absperreinrichtung abriegelbare Kavität.

Eine Gasturbine und deren Arbeitsweise ist allgemein bekannt. Demnach weist eine Gasturbine einen Verdichter für Verbrennungsluft, eine Brennkammer sowie eine Turbine zum Antrieb sowohl des Verdichters wie auch einer Arbeitsmaschine, z. B. eines Generators, auf. Dazu sind die Turbine und der Verdichter auf einer gemeinsamen, auch als Turbinenläufer bezeichneten Turbinenwelle angeordnet, mit der auch die Arbeitsmaschine verbunden ist, und die um ihre Längsachse drehbar gelagert ist. Die Brennkammer ist mit mindestens einem Brenner zur Verbrennung eines flüssigen oder gasförmigen Brennstoffs bestückt.

Der Verdichter wie auch die Turbine weisen jeweils eine Anzahl von mit der Turbinenwelle verbundenen, rotierbaren Laufschaufeln auf. Die Laufschaufeln sind kranzförmig an der Turbinenwelle angeordnet und bilden somit eine Anzahl von Laufschaufelreihen. Weiterhin umfasst sowohl der Verdichter als auch die Turbine eine Anzahl von feststehenden Leitschaufeln, die ebenfalls kranzförmig unter der Bildung von Leitschaufelreihen an einer Innenwand des Gehäuses von Verdichter bzw. Turbine befestigt sind. In der Turbine dienen die Laufschaufeln zum Antrieb der Turbinenwelle durch Impulsübertrag vom die Turbine durchströmenden Arbeitsmedium. Die Leitschaufeln dienen hingegen zur Strömungsführung des Arbeitsmediums zwischen jeweils zwei in Strömungsrichtung des Arbeitsmediums gesehen aufeinanderfolgenden Laufschaufelreihen oder Laufschaufelkränzen. Ein aufeinanderfolgendes Paar aus einem Kranz von Leitschaufeln oder einer Leitschaufelreihe und aus einem Kranz von Laufschaufeln oder einer Laufschaufelreihe wird dabei auch als Turbinenstufe bzw. als Verdichterstufe bezeichnet.

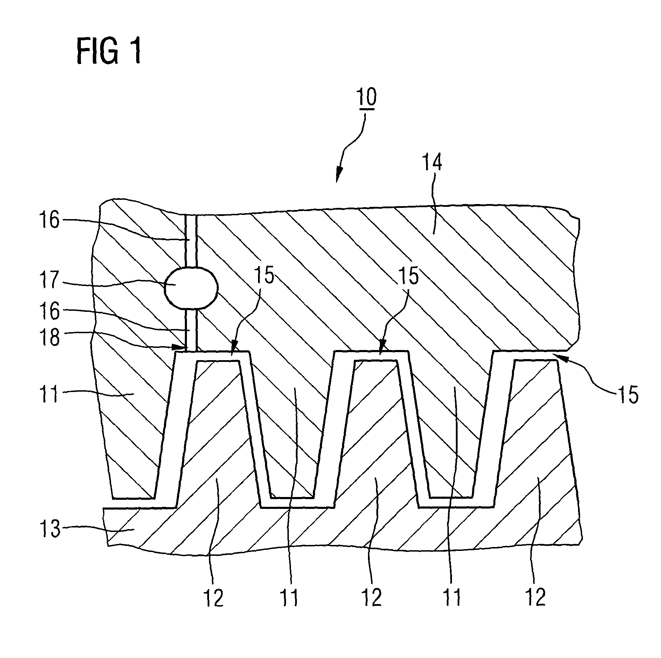

FIG 1 zeigt in einem Vertikalschnitt entlang der Längsachse einer Gasturbine einen Ausschnitt aus dem insgesamt mit 10 bezeichneten Verdichter einer solchen Gasturbine. Dargestellt ist die abwechselnde Folge stationärer Schaufeln 11 und rotierender Schaufeln, die dazu an einer Turbinenwelle 13 angebracht sind. Zwischen den rotierenden Schaufeln 12 und den stationären Schaufeln 11 als Bestandteil eines Gehäuses 14 der Gasturbine oder des Verdichters 10 der Gasturbine verbleibt ein Radialspalt 15.

Beim Betrieb saugt der Verdichter 10 Umgebungsluft ein und komprimiert sie. Die Luft durchströmt den Verdichter 10 in Bezug auf die Darstellung in FIG 1 in einer Richtung von links nach rechts. Ein Teil der Luft, die in den Verdichter 10 eindringt, wird nach teilweiser Kompression entnommen, und verwendet, um die stationären Schaufeln im Turbinenabschnitt der Gasturbine zu kühlen (nicht dargestellt). Diese erwärmen sich in besonderem Maße aufgrund des heißen, aus dem oder jedem Brenner austretenden und in den Turbinenabschnitt geleiteten komprimierten Gases. Das heiße komprimierte Gas strömt durch die Reihen stationärer und rotierender Schaufeln im Turbinenabschnitt, wo das Gas expandiert und Leistung erzeugt, welche die Turbinenwelle 13 in Rotation versetzt. Zur Kühlung zumindest der stationären Schaufeln im Turbinenabschnitt wird komprimierte oder teilweise komprimierte Umgebungsluft aus dem Verdichter 10 mittels einer Anzapfleitung 16 entnommen; der Verdichter wird "angezapft". Im Verlauf der Anzapfleitung 16 ist eine Kavität 17, also ein Hohlraum im Gehäuse 14, vorgesehen. Ein Einlass 18 der Anzapfleitung 16 befindet sich im Bereich einer der rotierenden Schaufeln 12 an der Innenseite des Gehäuses 14.

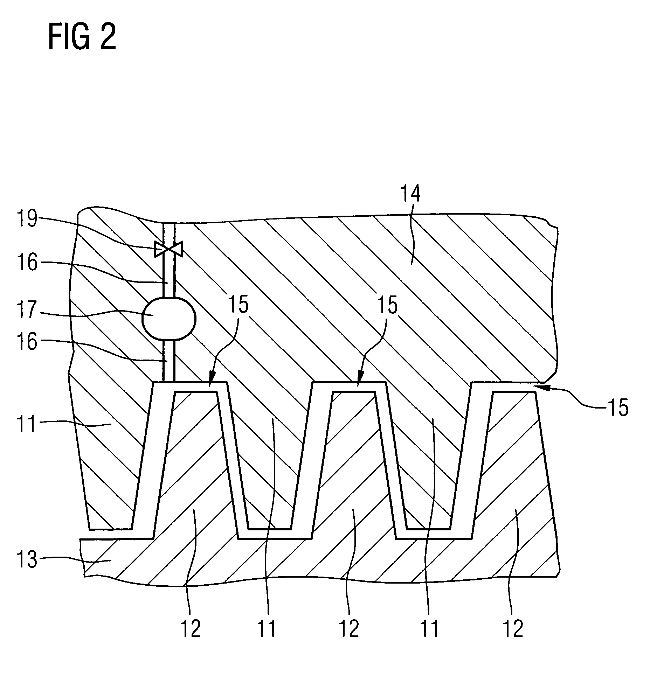

FIG 2 zeigt die entsprechend der Erfindung modifizierte Anzapfleitung 16. Zur Verhinderung des Ab- oder Auskühlens des Gehäuses 14 des Verdichters ist vorgesehen, dass die Anzapfleitung 16 verriegelbar oder zumindest teilweise verriegelbar ist um den Abfluss von Luft durch die Anzapfleitung 16 zu verhindern bzw. zu verringern. Dazu ist in der Anzapfleitung 16 ein als Ventil 19 dargestellte Absperreinrichtung vorgesehen.

Durch Betätigen des Ventils 19 in an sich bekannter Weise kann die Anzapfleitung 16 teilweise oder vollständig verriegelt werden. Umgebungsluft fließt dann durch die Anzapfleitung 16 nicht mehr oder nur noch vermindert ab. Der ansonsten mit dem Abfluss der Umgebungsluft verbundene Wärmeverlust ist entsprechend unterbunden oder verringert.

Dadurch, dass sich das Ventil 19 in Flussrichtung der Umgebungsluft durch die Anzapfleitung 16 hinter der Kavität 17 befindet, ist die Kavität 17 beim Betätigen des Ventils 19 ebenfalls ganz oder teilweise abgeschlossen. Die Kavität 17 wirkt dann wie ein Isolator und verhindert wirksam zusätzlich das Auskühlen des Verdichtergehäuses 14.

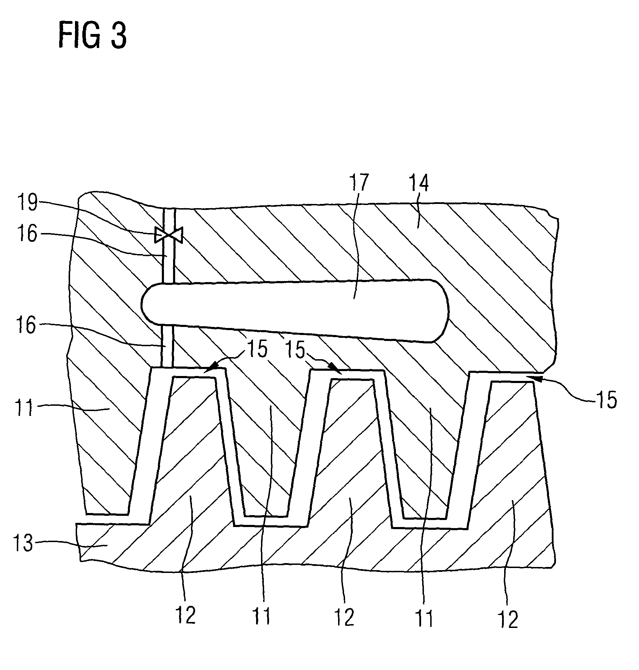

FIG 3 zeigt im Wesentlichen die gleiche Darstellung wie FIG 2. Allerdings ist die Kavität 17 im Hinblick auf eine gewünschte thermische Beeinflussung des Verdichtergehäuses 14 gestaltet. Dazu ist die Kavität 17 einerseits vergrößert und andererseits derart geformt, dass sie entlang ihrer Längserstreckung zumindest den Bereich zweier aufeinander folgender rotierender Schaufeln 12 erfasst. Mit einer derart ausgestalteten Kavität 17 ergibt sich eine besonders günstige Form für deren Funktion als Isolator. Die Kavität kann auch noch länger ausgeführt sein als dargestellt. Größe und Form der Kavität sind im Wesentlichen nur durch die Ansprüche an die Festigkeit des Verdichtergehäuses 14 beschränkt.

Da sich auch der Verdichter 10 erwärmt, ist auch dessen Kühlung, insbesondere im Bereich eines hinteren Verdichterkanals, sinnvoll. Dazu ist die in FIG 3 dargestellte besondere Gestaltung der Kavität 17 ebenfalls sinnvoll, denn beim Durchströmen der Kavität 17 nimmt die Anzapfluft Wärme des Verdichtergehäuses 14 auf und trägt somit zu dessen Kühlung bei.

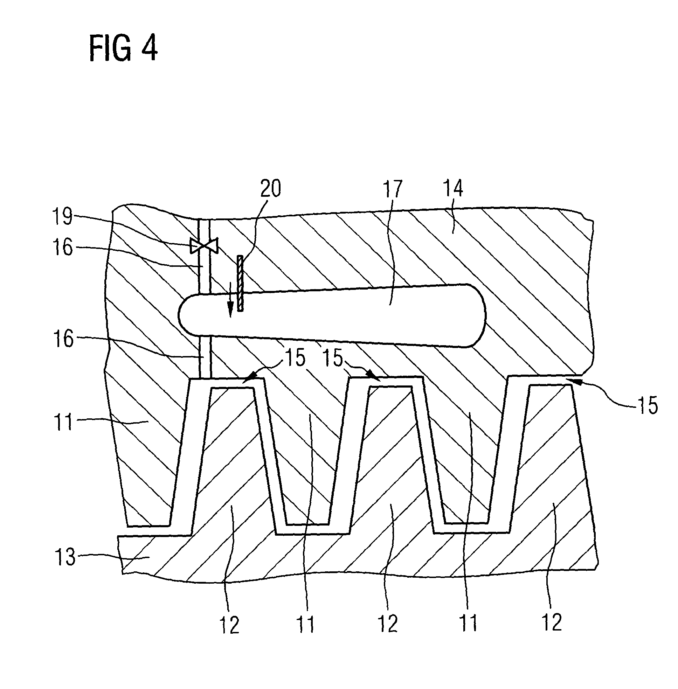

FIG 4 zeigt eine im Vergleich zu FIG 3 um ein Absperrorgan 20 ergänzte Darstellung. Während eines so genannten "Turnbetriebs" der Gasturbine, welcher zur Abkühlung im Anschluss an den Betrieb der Gasturbine durchgeführt wird, ist die Kavität 17 vom Verdichterkanal strömungstechnisch mittels des Absperrorgans 20 in Form eines Schotts oder dergleichen, dessen Beweglichkeit durch den vertikalen Pfeil verdeutlicht ist, entkoppelt. Das Absperrorgan 20 ist dazu im Bereich eines Eingangs der Kavität 17 angeordnet, so dass durch das Absperrorgan der wesentliche Teil des Volumens der Kavität vom Verdichterkanal getrennt werden kann. in der Kavität 17 wird dann umso besser die erwärmte Verdichterluft gespeichert, welche ein schnelles Abkühlen des Verdichtergehäuses 14 im Vergleich zum Rotor der Gastrubine verhindert.

Nach dem Kaltstart der Gasturbine wird die Kavität 17 gezielt mit Verdichterluft beaufschlagt, so dass die in Strömungsrichtung hinteren (und somit wärmeren) Verdichterstufen gekühlt werden, um auf diese Weise eine verzögerte Erwärmung des Verdichtergehäuses 14 zu erzielen. Die Erwärmung des Verdichtergehäuses 14 erfolgt dann in gleichem Maße wie die Erwärmung des Rotors.

Damit lässt sich die Erfindung kurz wie folgt darstellen: Es wird eine Gasturbine mit einer Absperreinrichtung in einer zur Entnahme von Kühlluft aus dem Verdichter 10 vorgesehenen Anzapfleitung 18 angegeben, so dass das Verdichtergehäuse 14 zur Verringerung der Abkühlung abgeschottet werden kann. Gehäuse und Rotor kühlen sich in etwa in gleichem Maße ab, so dass eine gleichmäßige Wärmekontraktion gegeben ist. Eine stärkere Abkühlung des Gehäuses 14 und damit eine Einschnürung um den langsamer abkühlenden Rotor kann auf diese Weise verhindert werden. Dies macht Warmstarts problemloser, weil ein Anstreifen des Rotors an der in gleicher Weise wie der Rotor sich abkühlenden Gehäuseinnenwand weitestgehend ausgeschlossen ist.

## Patentansprüche

1. Gasturbine mit einer Turbine und einem ein Verdichtergehäuse (14) umfassenden Verdichter (10),
wobei der Verdichter (10) zur Kühlung der Turbine mittels mindestens einer Anzapfleitung (16) zur Entnahme von komprimierter oder teilweise komprimierter Luft angezapft ist und
wobei die Anzapfleitung (16) eine Absperreinrichtung, insbesondere ein Ventil (19), aufweist.

2. Gasturbine nach Anspruch 1,
wobei die Anzapfleitung (16) eine Kavität (17) aufweist und
wobei die Kavität (17) in Strömungsrichtung der entnommenen oder entnehmbaren Luft vor der Absperreinrichtung liegt.

3. Gasturbine nach Anspruch 2,
wobei die Kavität (17) im Gehäuse (14) des Verdichters (10) derart geformt ist, dass sie sich ausgehend von einer Position eines Einlasses (18) der Anzapfleitung (16) und einer in diesem Bereich befindlichen stationären Schaufel (12) zumindest noch bis in den Bereich einer nächst folgenden stationären Schaufel (12) erstreckt.

4. Gasturbine nach Anspruch 3,
wobei sich die Kavität (17) bis in den Bereich einer in Richtung des Einströmens der Umgebungsluft in den Verdichter (10) nächst folgenden stationären Schaufel (12) erstreckt.

5. Gasturbine nach einem der Ansprüche 3 oder 4,
wobei die Kavität (17) an ihrem Eingang ein Absperrorgan (20) aufweist.

6. Verfahren zum Betrieb einer Gasturbine nach einem der Ansprüche 1 bis 5,
wobei beim Herunterfahren der Gasturbine die Absperreinrichtung, insbesondere das Ventil (19) geschlossen oder teilweise geschlossen wird.

7. Verfahren zum Betrieb einer Gasturbine nach Anspruch 5,
wobei beim Turnbetrieb der Gasturbine der Kavität mittels des Absperrorgans (20) verschlossen wird.

8. Verdichter (10) mit einem Verdichtergehäuse (14) oder Verdichtergehäuse (14) eines solchen Verdichters (10), der für eine Gasturbine mit einer Turbine geeignet oder vorgesehen ist und zur Kühlung der Turbine mittels mindestens einer Anzapfleitung (16) zur Entnahme von komprimierter oder teilweise komprimierter Luft angezapft ist,
wobei die Anzapfleitung (16) eine Absperreinrichtung, insbesondere ein Ventil (19), aufweist.

9. Verdichter oder Verdichtergehäuse nach Anspruch 8,
wobei die Anzapfleitung (16) eine Kavität (17) aufweist und
wobei die Kavität (17) in Strömungsrichtung der entnommenen oder entnehmbaren Luft vor der Absperreinrichtung liegt.

10. Verdichter oder Verdichtergehäuse nach Anspruch 9,
wobei die Kavität (17) im Verdichtergehäuse (14) derart geformt ist, dass sie sich ausgehend von einer Position eines Einlasses (18) der Anzapfleitung (16) und einer in diesem Bereich befindlichen stationären Schaufel (12) zumindest noch bis in den Bereich einer nächst folgenden stationären Schaufel (12) erstreckt.

11. Verdichter oder Verdichtergehäuse nach Anspruch 10,
wobei sich die Kavität (17) bis in den Bereich einer in Richtung des Einströmens der Umgebungsluft in den Verdichter (10) nächst folgenden stationären Schaufel (12) erstreckt.

12. Verdichter oder Verdichtergehäuse nach einem der Ansprüche 10 oder 11,
wobei die Kavität (17) an ihrem Eingang ein Absperrorgan (20) aufweist.
